Europäisches Patentamt

European Patent Office

Office européen des brevets

(19)

(11) Numéro de publication: **0 184 506**
**B1**

## (12) FASCICULE DE BREVET EUROPEEN

(45) Date de publication du fascicule du brevet:
**30.03.88**

(21) Numéro de dépôt: **85402353.8**

(22) Date de dépôt: **29.11.85**

(51) Int. Cl.⁴: **B 01 J 21/12,** B 01 J 23/02,
B 01 J 23/10

(54) **Procédé de fabrication de supports de catalyseurs à base d'alumine dont la durabilité est améliorée.**

(30) Priorité: **05.12.84 FR 8418507**

(43) Date de publication de la demande:
**11.06.86 Bulletin 86/24**

(45) Mention de la délivrance du brevet:
**30.03.88 Bulletin 88/13**

(84) Etats contractants désignés:
**BE CH DE FR GB IT LI NL**

(56) Documents cités:
**FR - A - 2 249 852
FR - A - 2 257 335
FR - A - 2 324 361
US - A - 3 239 521**

**DERWENT JAPANESE PATENT REPORT, vol. 75, no. 33,
12 septembre 1975, section H, Derwent Publications
Ltd., Londres, GB**

(73) Titulaire: **RHONE-POULENC CHIMIE, 25, quai Paul
Doumer, F-92408 Courbevoie Cédex (FR)**

(72) Inventeur: **Nortier, Patrice, 2, Allée des Fauvettes,
F-93230 - Romainville (FR)**
Inventeur: **Dupin, Thierry, 5, rue de Pré de la Treille,
F-38320 Eybens (FR)**
Inventeur: **Latourrette, Bertrand, 21, Allée Clémencet,
F-93340 - Le Raincy (FR)**

(74) Mandataire: **Dubruc, Philippe et al, RHONE-POULENC
INTERSERVICES Service Brevets Chimie 25, quai
Paul-Doumer, F-92408 Courbevoie Cédex (FR)**

**Description**

La présente invention concerne un procédé de fabrication de supports de catalyseurs à base d'alumine dont la durabilité est améliorée.

Elle concerne plus particulièrement un procédé de fabrication de tels supports à base d'alumine se présentant sous forme d'agglomérés d'alumine.

Il est bien connu que, pour de nombreuses applications, comme le traitement des gaz d'échappement des moteurs à combustion interne, les hydrotraitements des produits pétroliers, la déshydrohalogénation, l'hydrocraquage, l'hydrogénation, la déshydrogénation, la déshydrocyclisation d'hydrocarbures ou autres composés organiques, les réactions d'oxydation et de réduction, on utilise des catalyseurs dont le support est à base d'alumine.

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Bien entendu, il est contenu dans la notion de support que celui-ci doit maintenir physiquement les cristallites de catalyseur en place dans le réacteur où à lieu la réaction chimique, et c'est pourquoi le support doit posséder une tenue mécanique appropriée à l'application choisie.

La qualité d'un support de catalyseur est donc liée, d'une part à sa surface spécifique (SBE), qui peut être déterminée par la méthode BET et d'autre part, à sa solidité mécanique (EGG), qui peut être déterminée en mesurant la force nécessaire à l'écrasement d'une particule de support.

Néanmoins, cette caractérisation est insuffisante car il importe à l'utilisateur, non seulement que le catalyseur neuf soit très actif et solide, mais qu'il le demeure le plus longtemps possible, afin de réduire les coûts inhérents au remplacement du lit catalytique.

On voit donc qu'il est nécessaire de prendre en compte un critère de durabilité lors de l'évaluation d'un support de catalyseur.

Compte tenu du rôle du support dans la catalyse hétérogène, on peut définir la durabilité d'un support comme l'aptitude à conserver une surface élevée dans le réacteur dans lequel il est mis en œuvre après une certaine durée d'exposition aux conditions thermiques et mécaniques qui y règnent.

En effet, deux facteurs se superposent lors du vieillissement d'un support de catalyseur:

— d'une part, des transformations de phases irréversibles peuvent se produire, notamment sous l'effet de températures élevées, provoquant le frittage, c'est-à-dire une diminution de la surface spécifique due à la coalescence des micropores très fins. Lors de cette coalescence, une partie du catalyseur est englobée dans la masse du support et ne peut plus être en contact avec les réactifs,

— d'autre part, et ce phénomène est particulièrement accentué dans le cas de lits bouillonnants ou de lits fluidisés, ou encore de la post-combustion automobile, les chocs entre les agglomérés peuvent conduire à une abrasion en surface qui produit des particules fines qui peuvent être entraînées par le flux des réactifs. On assiste alors à une diminution de l'activité catalytique due à une perte de catalyseur dans le réacteur.

La présente invention se propose donc de fournir un procédé de fabrication de supports de catalyseurs à base d'alumine dont la durabilité, c'est-à-dire la résistance au vieillissement, soit considérablement améliorée par rapport aux supports de l'art antérieur.

Il est bien connu de l'homme de l'art que l'alumine, notamment sous ses formes dites «Alumine de transition» et plus particulièrement sous ses formes dites γ (gamma) et δ (delta) est un excellent support de catalyseur. Une méthode de fabrication d'agglomérés d'alumines utilisables comme catalyseurs ou supports de catalyseurs est décrite dans le brevet européen n° 55 164 au nom de la demanderesse.

Il a déjà été proposé d'ajouter à l'alumine divers composés destinés à améliorer ses qualités au vieillissement. Ainsi il est connu d'ajouter:

— un oxyde de terre rare, par exemple ainsi que décrit dans FR-A-2 257 335,

— un oxyde d'alcalino-terreux, par exemple ainsi que décrit dans FR-A-2 271 160 et FR-A-2 140 575,

— de l'oxyde de zirconium par exemple ainsi que décrit dans FR-A-2 344 361,

— de l'oxyde de bore, par exemple ainsi que décrit dans le brevet des Etats-Unis d'Amérique n° 2 422 884,

— de la silice obtenue par imprégnation de l'aggloméré avec un tétraester organique de l'acide silicique, comme le composé $(C_2H_5O)_4$ Si en solution dans un solvant non aqueux, suivie d'une hydrolyse et d'une calcination, par exemple ainsi que décrit dans Fr-A-2 249 852.

Les supports stabilisés obtenus par ces techniques possèdent, pour certains une durabilité accrue par rapport à l'alumine pure, mais cette durabilité est très inférieure à celle obtenue selon le procédé de l'invention.

La demanderesse a découvert que l'on peut améliorer de façon exceptionnelle et surprenante la durabilité des supports à base d'alumine en les stabilisant par imprégnation avec une solution aqueuse contenant l'élément silicium essentiellement sous forme d'ion silicate et l'élément azote sous forme d'ion ammonium quaternaire, puis en les séchant et en les activant par une calcination qui décompose le cation organique en composés volatils qui diffusent hors du support.

La présente invention concerne en effet un procédé de fabrication de supports de catalyseurs à base d'alumine caractérisé en ce que, dans une première étape, on imprègne ledit support avec une solution aqueuse d'un silicate d'ammonium quaternaire, dans une deuxième étape on sèche le support imprégné et dans une troisième étape on calcine ledit support.

Sans limiter l'invention à la théorie, on peut penser que la structure particulière du composé contenant l'élément silicium, lequel composé est un anion complexe, comme, par exemple, l'anion $(Si_6O_{15})^{6-}$ dans le silicate de tétraéthyl ammonium ou l'anion $(Si_8O_{20})^{8-}$ dans le silicate de tétraméthyl ammonium conduit à une réaction avec l'alumine, dont le produit confère aux agglomérés une durabilité exceptionnelle en augmentant leur résistance à la fois vis-à-vis du frittage et de l'abrasion.

Les supports de catalyseurs à base d'alumine selon l'invention se présentent de préférence sous la forme de particules: sphères, pastilles, extrudés, concassés...

On entend selon l'invention par support à base d'alumine, un support contenant au moins 55% en poids d'alumine.

Selon la première étape du procédé de l'invention on imprègne le support à base d'alumine avec une solution aqueuse d'un silicate d'ammonium quaternaire.

L'ion ammonium quaternaire des silicates mis en œuvre selon l'invention présente des radicaux hydrocarbonés ayant de préférence 1 à 3 atomes de carbone.

Selon le procédé de l'invention, on met de préférence en œuvre au moins un silicate choisi parmi: le silicate de tétraméthyl ammonium le silicate de tétraéthylammonium, le silicate de tétrapropylammonium, le silicate de tétrahydroxyéthylammonium (ou silicate de tétraéthanolammonium). Le silicate de tétraméthylammonium est notamment décrit dans Y.U.I.Smolin «Structure of water soluble silicates with complexe cations» dans «Soluble silicates» Edition 1982. Le silicate de tétraéthanolammonium est notamment décrit dans Helmut H. Weldes, K. Robert Lange «Properties of soluble silicates» dans «Industrial and Engineering Chemistry» vol. 61, N° 4, Avril 1969, et dans le brevet US-A-3 239 521. Les références citées ci-dessus décrivent également d'autres silicates d'ammonium quaternaire solubles dans l'eau qui font partie de l'invention.

Selon un mode de mise en œuvre préféré de l'invention, les silicates d'ammonium quaternaire que l'on peut représenter par la formule

$$(SiO_{2+x}^{2x-} + 2xN^+R_4)$$

présentent un rapport $r = \dfrac{\text{nombre de mole de Si}}{\text{nombre de mole d'N}}$ inférieur à 15. Ce rapport est plus particulièrement préféré inférieur à 2 et plus spécifiquement compris entre 0,1 et 1,5. Sans limiter la présente invention à la théorie, on peut penser que plus le rapport r est élevé, plus la masse moléculaire de l'ion silicate est élevée et plus son rayon hydrodynamique l'est; ainsi au-dessus d'une certaine valeur pour le rapport r que l'on peut situer vers 15, le silicate ne peut plus pénétrer dans les micropores fins, ce qui limite sa réaction avec le support, donc son efficacité pour les buts de l'invention.

Selon le procédé de l'invention on met en œuvre une quantité de silicate d'ammonium quaternaire telle que la quantité de silice introduite dans le support soit comprise entre 0,1 et 25% et de préférence 1 et 5% en poids de silice par rapport au support fini.

Selon le procédé de l'invention, l'imprégnation du support est réalisée de préférence «à sec», c'est-à-dire que le volume total de la solution utilisée est approximativement égal au volume poreux total présenté par le support.

Selon une variante du procédé de l'invention, on peut introduire dans le support avant, après ou simultanément au silicate d'ammonium quaternaire au moins un précurseur d'oxydes de terre rare, d'alcalino-terreux et/ou de zirconium conduisant par décomposition thermique aux oxydes correspondants dans le support fini. La quantité de ces précurseurs introduite est telle qu'elle correspond à une quantité comprise entre 0 et 20% et de préférence 1 et 10% et plus particulièrement 2 et 5% d'oxyde du ou des métaux par rapport au support fini.

Selon la deuxième étape du procédé de l'invention, on sèche le support imprégné pour éliminer l'eau en laissant ainsi les composés utilisés sous forme des précurseurs des oxydes désirés sous forme dispersée dans toute l'alumine. Ce séchage est généralement réalisé à une température comprise entre 80 et 500°C.

Selon la troisième étape du procédé de l'invention on calcine le support sec à une température comprise généralement entre 500 et 1000°C et de préférence entre 600 et 900°C pendant un temps suffisant, généralement 1 à 24 heures, pour calciner l'alumine et transformer les précurseurs en oxydes. Ainsi les silicates d'ammonium quaternaires se transforment en silice, et les précurseurs éventuels de terres rares, d'alcalino-terreux et de zirconium dans les oxydes correspondants.

Les supports obtenus selon l'invention présentent une durabilité considérablement améliorée par rapport à ceux obtenus selon les techniques classiques. En outre, le procédé de l'invention présente les avantages suivants:

— on peut introduire la silice par imprégnation du support déjà mis en forme, ce qui permet de modifier la quantité de silice que l'on introduit dans le support, sans modifier le procédé de mise en forme. Il est aussi possible, quoique moins intéressant, d'introduire les précurseurs de silice selon l'invention dans la masse du support avant sa mise en forme,

— le précurseur de silice, selon l'invention, étant utilisé en solution aqueuse, le procédé est simple et peu coûteux,

— on peut éliminer facilement par calcination, même à une température inférieure à 600°C, le cation organique. Par conséquent, il ne subsiste pas de composé gênant pour la fabrication, l'emploi et les performances du catalyseur fabriqué sur le support fabriqué selon l'invention.

Les exemples ci-après illustrent l'invention sans en limiter la portée.

### Exemple 1

### Préparation d'un support témoin A

Un échantillon de 100 grammes de billes d'alumine vendues par la société Rhône-Poulenc sous la référence SCM 129X et ayant les caractérisques suivantes:

— surface spécifique BET: 160 m²g⁻¹

— volume poreux total: 0,90 cm$^3$g$^{-1}$.

est calciné à la température de 600°C pendant 1 heure de façon à ajuster la surface spécifique à 110 ± 5 m$^2$g$^{-1}$.

Le support témoin ainsi préparé est référencé A par la suite.

## Exemple 2

### Préparation de supports C, D, F selon l'art antérieur

Un échantillon de 100 grammes de billes d'alumine identique à celui de l'exemple 1 est imprégné à sec par 90 cm$^3$ d'une solution du tétraester éthylique de l'acide orthosilicique dans l'éthanol (produit connu sous l'appellation de silicate d'ethyle), contenant 15,6 g de l'élément silicium par litre de solution. Ce support imprégné est ensuite séché à 120°C pendant 3 heures puis calciné à 700°C de manière à ajuster sa surface spécifique à 110 ± 5 m$^2$g$^{-1}$.

Le support C selon l'art antérieur ainsi préparé contient 2% en masse de SiO$_2$ par rapport au support.

Un échantillon de 400 grammes de billes d'alumine identique à celui de l'exemple 1 est divisé en deux fractions D et F de 200 g. Les 200 grammes de la fraction D sont imprégnés à sec par 180 cm$^3$ d'une solution aqueuse de nitrate de lanthane et de nitrate de néodyme contenant 15,8 g de l'élément lanthane et 5,29 g de l'élément néodyme par litre de solution. Les 200 grammes de la fraction F sont imprégnés à sec par 180 cm$^3$ d'une solution aqueuse de nitrate de zirconyle contenant 16,45 g de l'élément zirconium par litre de solution. Ces deux fractions sont séchées pendant 3 h à 120°C et calcinées pendant 1 h à 600°C.

On obtient ainsi respectivement un support D selon l'art antérieur contenant 2% d'oxyde de lanthane et d'oxyde de néodyme par rapport au support et un support F selon l'art antérieur, contenant 2% d'oxyde de zirconium par rapport au support.

## Exemple 3

### Préparation de supports B, E, G selon l'invention

100 grammes de billes d'alumine de l'exemple 1 sont imprégnées à sec par 90 cm$^3$ d'une solution aqueuse de silicate de tétraéthylammonium présentant un rapport molaire SiO$_2$/(C$_2$H$_5$)$_4$N$^+$ égal à 1 et contenant 10,4 g de l'élément silicium par litre de solution. Ce support imprégné est ensuite séché à 120°C pendant 3 heures puis calciné 1 heure à 700°C de manière à ajuster sa surface spécifique à 110 ± m$^2$g$^{-1}$. Le support B selon l'invention ainsi préparé contient 2% en poids de silice par rapport à l'alumine.

On imprègne et on traite de la même façon que ci-dessus pour la fabrication du support B, 100 grammes du support D obtenu à l'exemple 2. On obtient ainsi un support E selon l'invention qui contient 2% (La$_2$O$_3$ + Nd$_2$O$_3$) et 2% de SiO$_2$ rapport au support.

On imprègne et on traite de la même façon que ci-dessus pour la fabrication du support B, 100 grammes du support F obtenu à l'exemple 2. On obtient ainsi un support G selon l'invention qui contient 2% de ZrO$_2$ et 2% de SiO$_2$ rapporté au support.

## Exemple 4

### Test de durabilité

100 grammes de support A sont divisés en 5 parties de 20 grammes dénommées A0, A1, A2, A3 et A4 qui subissent respectivement les mesures et/ou les traitements suivants:

A0: mesure de la surface spécifique SBE 0 selon la méthode BET à un point et mesure de l'attrition AIF 0 selon la procédure suivante:

– on calcine 2 heures à 300°C

– on tamise les billes à leur dimension inférieure nominale (par exemple s'il s'agit de billes 1,6/2,5 mm on tamise à 1,6 mm)

– on place 10 g de billes dans un appareil à secousse vendu par la Société PROLABO sous le nom microbroyeur DANGOUMAU que l'on fait fonctionner 30 minutes

– on tamise les billes restantes avec un tamis correspondant aux 3/4 de la dimension inférieure des billes de départ (par exemple 1,6 × 3/4 = 1,2 mm, on tamise à 1,25 mm car c'est le tamis AFNOR qui s'en approche le plus)

– on calcine 2 heures à 300°C, puis on pèse les billes restantes.

La résistance à l'attrition est donnée par la formule

$$\% \, AIF = \frac{P2}{P1} \times 100$$

P$_2$: poids du support mis en œuvre, P$_1$: poids du catalyseur refusé par le tamis après le test.

A1: Calcination pendant 4 heures à 1100°C puis mesure de la surface spécifique SBE 1 par la méthode BET à 1 Point.

A2: Calcination pendant 24 heures à 100°C, le reste du traitement étant identique à celui décrit an A1.

A3: Calcination pendant 48 heures à 1100°C, le reste du traitement étant identique à celui décrit en A1.

A4: Calcination pendant 72 heures à 1100°C, le reste du traitement étant identique à celui décrit en A1.

On mesure sur A1: SBE 1 et AIF 1
                A2: SBE 2 et AIF 2
                A3: SBE 3 et AIF 3
                A4: SBE 4 et AIF 4

On calcule ensuite pour chaque durée de calcination t$_i$ en fonction de la surface initiale restante du support après calcination et attrition;

$$y_i = \frac{SBE_i \times AIF_i}{SBE \, 0} \quad \text{pour } i = 1, 2, 3 \text{ et } 4.$$

On porte alors dans un repère orthogonal les points représentatifs des couples (t$_i$, y$_i$) pour i = 1, 2, 3 et 4 ainsi que le point (0,1) représentatif de l'état initial du support.

On trace la courbe joignant ces points et l'abcisse de son intersection avec la droite d'équation y = 0,75 est la durabilité.

Ainsi la durabilité représente la durée du traitement thermique qui entraîne une réduction aux trois quarts de la surface restante après le traitement thermique et le traitement mécanique.

*Exemple 5*

Le test défini à l'example 4 est aussi appliqué aux fractions B, C, D, E, F et G.

On obtient les résultats suivants:

| | Référence de la fraction | Durabilité (heures) |
|---|---|---|
| ART ANTERIEUR | A | 1,3 |
| INVENTION | B | 24 |
| ART ANTERIEUR | C | 8 |
| ART ANTERIEUR | D | 1,5 |
| INVENTION | E | 28 |
| ART ANTERIEUR | F | 1,5 |
| INVENTION | G | 32 |

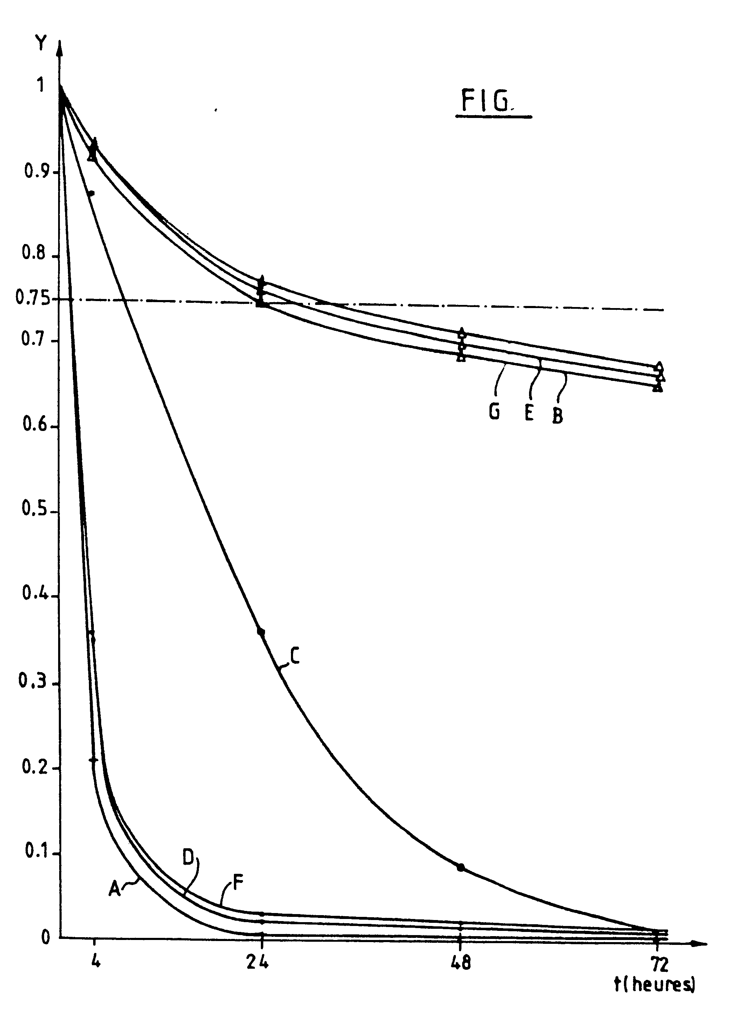

Les résultats on été reportés sur les courbes de la fig. 1 ci-jointe. Sur cette figure, les divers points représentent:

+ support non stabilisé
• support selon l'art antérieur
  support selon l'invention

**Revendications**

1. Procédé de fabrication de supports de catalyseurs à base d'alumine caractérisé en ce que, dans une première étape, on imprègne ledit support avec une solution d'un silicate d'ammonium quaternaire, dans une deuxième étape on sèche le support imprégné et dans une troisième étape on calcine ledit support.

2. Procédé selon la revendication 1, caractérisé en ce que le silicate d'ammonium quaternaire est choisi parmi: le silicate de tétraméthyl ammonium, le silicate de tétraéthylammonium, le silicate de tétrapropylammonium, le silicate de tétrahydroxyéthylammonium.

3. Procédé selon les revendications 1 ou 2, caractérisé en ce que la quantité de silicate d'ammonium quaternaire telle que la quantité de silice introduite dans le support soit comprise entre 0,1 et 25% en poids de silice par rapport au support fini.

4. Procédé selon la revendication 3, caractérisé en ce que la quantité est comprise entre 1 et 5%.

5. Procédé selon les revendications 1, 2, 3 ou 4, caractérisé en ce que l'imprégnation est réalisée à sec.

6. Procédé selon la revendication 1, caractérisé en ce que l'on introduit dans le support avant, après ou simultanément au silicate d'ammonium quaternaire au moins un précurseur d'oxydes de terre rare, d'alcalino-terreux et/ou de zirconium conduisant par décomposition thermique aux oxydes correspondants dans le support fini.

7. Procédé selon la revendication 6, caractérisé en ce que la quantité de ces précurseurs introduite est telle qu'elle correspond à une quantité comprise entre 0 et 20% par rapport au support fini.

8. Procédé selon la revendication 7, caractérisé en ce que la quantité est comprise entre 1 et 10%.

9. Procédé selon la revendication 8, caractérisé en ce que la quantité est comprise entre 2 et 5%.

10. Procédé selon la revendication 1, caractérisé en ce que le séchage est effectué à une température comprise entre 80°C et 500°C.

11. Procédé selon la revendication 1, caractérisé en ce que la calcination est effectuée à une température comprise entre 500 et 1000°C pendant 1 à 24 heures.

**Patentansprüche**

1. Verfahren zur Herstellung von Trägern für Katalysatoren auf Aluminiumbasis, dadurch gekennzeichnet, dass man in einem ersten Schritt diesen Träger mit einer wässrigen Lösung eines quaternären Ammoniumsilikats imprägniert, in einem zweiten Schritt den imprägnierten Träger trocknet und in einem dritten Schritt diesen Träger calciniert.

2. Verfahren nach Anspruch 1, dadurch gekennzeichnet, dass das quaternäre Ammoniumsilikat ausgewählt wird aus: Tetramethylammoniumsilikat, Tetraethylammoniumsilikat, Tetrapropylammoniumsilikat und Tetrahydroxyethylammoniumsilikat.

3. Verfahren nach Anspruch 1 oder 2, dadurch gekennzeichnet, dass die Menge des quaternären Ammoniumsilikats ebenso wie die Menge des in den Träger eingebrachten Siliciumdioxids zwischen 0,1 und 25 Gew.-% Siliciumdioxid bezogen auf den fertigen Träger beträgt.

4. Verfahren nach Anspruch 3, dadurch gekennzeichnet, dass die Menge zwischen 1 und 5% liegt.

5. Verfahren nach Anspruch 1, 2, 3 oder 4, dadurch gekennzeichnet, dass die Imprägnierung trocken durchgeführt wird.

6. Verfahren nach Anspruch 1, dadurch gekennzeichnet, dass man vorher, nachher oder gleichzeitig mit dem quaternären Ammoniumsilikat wenigstens einen Vorläufer der Oxide der Seltenen Erden, Erdalkalimetalle und/oder Zirkonium in den Träger einbringt, der durch thermische Zersetzung im fertigen Träger zu den entsprechenden Oxiden führt.

7. Verfahren nach Anspruch 6, dadurch gekennzeichnet, dass die Menge dieser eingebrachten Vorläufer so gewählt ist, dass sie einer Menge zwischen 0 und 20 Gew.-% bezogen auf den fertigen Träger entspricht.

8. Verfahren nach Anspruch 7, dadurch gekennzeichnet, dass die Menge zwischen 1 und 10% beträgt.

9. Verfahren nach Anspruch 8, dadurch gekennzeichnet, dass die Menge zwischen 2 und 5% beträgt.

10. Verfahren nach Anspruch 1, dadurch gekennzeichnet, dass die Trocknung bei einer Temperatur zwischen 80°C und 500°C durchgeführt wird.

11. Verfahren nach Anspruch 1, dadurch gekennzeichnet, dass die Calcinierung bei einer Temperatur zwischen 500 und 1000°C 1 bis 24 Stunden lang erfolgt.

**Claims**

1. Process for the production of alumina-based catalyst supports, characterized in that in a first stage, the said support is impregnated with an aqueous solution of a quaternary ammonium silicate, in a second stage, the impregnated support is dried and in a third stage, the said support is calcined.

2. Process according to claim 1, characterized in that the quaternary ammonium silicate is chosen from amongst tetramethylammonium silicate, tetraethylammonium silicate, tetrapropylammonium silicate and tetrahydroxyethylammonium silicate.

3. Process according to claims 1 or 2, characterized in that the quantity of quaternary ammonium silicate is such that the quantity of silica introduced into the support is between 0.1 and 25% by weight of silica relative to the finished support.

4. Process according to claim 3, characterized in that the quantity is between 1 and 5%.

5. Process according to claims 1, 2, 3 or 4, characterized in that the impregnation is carried out in the dry state.

6. Process according to claim 1, characterized in that before, after or simultaneously with the introduction of quaternary ammonium silicate, at least one precursor for rare earth, alkaline earth metal and/or zirconium oxides leading, by thermal decomposition, to the corresponding oxides in the finished support, is introduced.

7. Process according to claim 6, characterized in that the quantity of these precursors introduced is such that it corresponds to a quantity of between 0 and 20% relative to the finished support.

8. Process according to claim 7, characterized in that the quantity is between 1 and 10%.

9. Process according to claim 8, characterized in that the quantity is between 2 and 5%.

10. Process according to claim 1, characterized in that the drying is carried out at a temperature of between 80°C and 500°C.

11. Process according to claim 1, characterized in that the calcination is carried out at a temperature of between 500 and 1000°C for 1 to 24 hours.

FIG.